# EUROPEAN PATENT SPECIFICATION

(11) **EP 0 773 496 B1**
(45) Date of publication and mention of the grant of the patent: **04.07.2001**
(21) Application number: 96307774.8
(22) Date of filing: 28.10.1996
(51) Int. Cl.: G06F 3/033

(54) **Touch-panel operation**
Betrieb eines berührungsempfindlichen Bildschirms
Fonctionnement d'un panneau tactile

(30) Priority: 09.11.1995 JP 29080195
(43) Date of publication of application: 14.05.1997
(73) Proprietor: International Business Machines Corporation, Armonk, N.Y. 10504 (US)
(72) Inventor: Furuhata, Tomotake, Yokohama-shi, Kanagawa-ken (JP); Hirano, Toshiki, Suginami-ku, Tokyo (JP); Sawada, Chihiro, Setagaya-ku, Tokyo (JP)
(74) Representative: Moss, Robert Douglas

(56) References cited:
- EP-A- 0 490 001

## Description

### Field of the Invention

The present invention relates to touch panels and to methods for operating touch panels such as are provided on a display for a personal computer, or on a factory automation device.

### Background of the Invention

As personal computers are employed in places other than offices, there is an increased demand for new input devices that can take the place of the common user interface that involves the use of a keyboard and a mouse. As a result of the request for new input devices, attention has been directed to touch-panels, which are devices that are attached to the screens of display devices and that accept data input accomplished by users touching the screens with their fingers. Currently, touch-panels are already being used widely as terminal interfaces for financial and factory automation terminals.

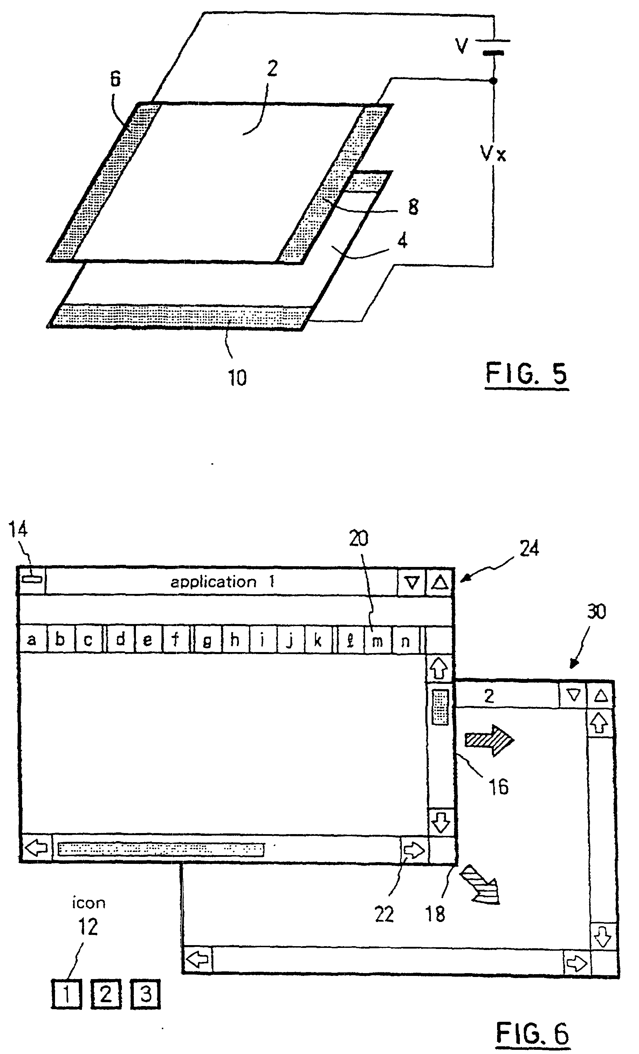

Touch-panels are roughly classified into the type shown in Fig. 5, which detect position information by using a change in sheet resistance due to the touch of a finger, and an optical type (not shown) which acquire position information by scanning the X-Y plane and detecting the shielding by a touching finger.

When an operator presses an arbitrary area on the surface of a touch-panel with his or her finger, the touch-panel outputs the location of the position pressed with the finger as X-Y two-dimensional position information. An example structure of a sheet resistance touch-panel will now be briefly described while referring to Fig. 5. For the touch-panel, a sheet for detecting the X directional position and a sheet for detecting the Y directional position are overlapped. In Fig. 5 is shown such a sheet for one of the directions. The sheet is provided by attaching two rectangular transparent or translucent electrodes 2 and 4 opposite each other with an intervening layer that consists of a fluid insulation material (not shown). A predetermined direct current voltage V is applied between one side 6 of the transparent electrode 2 and an opposite side 8, and the other transparent electrode 4 is, for example, grounded at a side 10. Then, when a finger touches the transparent electrode 2, which thus contacts the transparent electrode 4 to cause a short-circuit, the sheet resistance at the transparent electrode 2 is changed, and the change is employed to detect the location of the position that was touched by the finger. This type of sheet is used for both X and Y directions so that the two-dimensional location of a touch can be detected.

An example operation during which a finger is used to touch such a touch-panel will now be explained while referring to Fig. 6. Fig. 6 is a diagram showing information displayed on the display screen of a personal computer to which a touch-panel is attached. Two windows 24 and 30 for applications 1 and 2 are shown open. Three other applications are represented by icons displayed at the lower left of the screen.

If the window 24 for application 1 is to be transversely extended across the display screen, as indicated by the transverse arrow, an area 16 that represents the right side vertical frame of the window 24 is touched by a finger, and while the finger is moved to the right in contact with the tough-panel, the area 16 is extended. Similarly, if the window 24 is to be enlarged in the direction indicated by the diagonally lower right arrow, the window lower right corner 18 is pressed with a finger and the finger is moved diagonally to the lower right, so that the window 24 is enlarged.

When the function represented by an icon'"m" 20 in the window 24 is to be activated, a finger is placed within the frame of the icon 20 and the frame is tapped once (single-tapping) with the finger, so that the function for the icon 20 is activated. In the same manner, if a scroll bar is to be operated, a finger is placed within the frame for a scrolling arrow 22 and single-tapping is used to scroll the frame.

When the window 24 is to be closed, a frame 14 at the upper left corner of the window 24 is tapped twice (double-tapping) with a finger. Similarly, when an icon 12 at the lower left corner on the screen is to be opened, double-tapping with a finger is performed within the frame for the icon 12.

By using the touch-panel, an operator can use his or her finger to directly control the moving of a pointer on a display screen and the clicking of a pointer, which are functions that are conventionally performed by using a mouse and a button provided on the mouse.

However, recently, as display resolution for personal computers is being increased and application displays are becoming complicated, the size of the windows to be displayed, the size of the displays in the windows, and the sizes of icons are reduced. Further, while pointing and clicking are easily performed with a mouse, comparable operations where a finger is used to give direct instructions are difficult.

Especially for the double-tapping of a touch-panel with a finger, which corresponds to the double clicking of a mouse; accurate performance is extremely difficult, except for the case where the resolution of a display and the resolution for position detection on a touch panel is low, and the case where a special process is performed to especially extend an area for which double-tapping is available.

A data input method using double-tapping on a conventional touch panel would require that the exact, same place on a touch-panel be pressed twice within a short time. This manipulation can be performed so long as a touch area is large. However, to move applications in a plurality of windows on a display of a PC, a higher resolution that provides an effect which is similar to that provided by double clicking using a mouse and pointer is required, and conventional double-tapping cannot provide the desired effect.

Although touch input systems using fingers do not require special devices, such as a pen, and are excellent as user interfaces for devices that are used by large numbers of people, such as on-line terminals in banks or FA controllers, the employment of touch-panels is limited because of the above described problems. Actually, in the above application fields, only a single-tapping function is demonstrated and a double-tapping function is not provided.

However, current general-purpose operating systems (OSs), such as OS/2 (trademark of IBM Corp.), and most application programs are provided with the presumption that single clicking and double clicking of the left button of a mouse will be employed. To use these software programs with a touch-panel, the touch-panel must somehow be made to acknowledge double-tapping.

It is one object of the present invention to provide a method for driving a touch panel, by which the acknowledging of double tapping is facilitated for a touch-panel that is located on a high resolution display mounted in a personal computer of a factory automation device, and a touch input method.

### Disclosure of the Invention

To achieve the above object, according to the present invention as set forth in claims 1 and 4, a touch-panel driving method and a corresponding touch panel comprises the features of: pressing a desired location on a touch-panel, which is located on a display, by using a first pressing means, and tapping a location that is different from the desired location by using a second pressing means; outputting from the touch-panel coordinate data that is different by a predetermined amount from coordinate data at the desired position; and employing coordinate data, which is output from the touch-panel and is obtained before and after tapping is performed, to determine whether or not to acknowledge that double tapping has been performed at the desired position.

Further, to achieve the above object, there is provided a touch input method, for a touch-panel, by which while a desired location on the touch-panel located on a display is pressed by using a first pressing means, a location that is different from the desired position is tapped by using a second pressing means.

In addition, to achieve the above object, in the touch input method for a touch-panel, operator's fingers serve as the first and the second pressing means.

According to the present invention, unlike conventional double-tapping, a finger does not have to be used to press a target location twice within a short time. In other words, as a finger does not have to be released from the target location, double-tapping can be accurately and easily acknowledged.

According to the present invention, double-tapping is identified by using position information for a first finger before and after a short period during which another place is tapped by a second finger. Even when the first finger that is pressed against the target location is unsteady and moves slightly, the entire operation for double-tapping is substantially enhanced compared with the instability of conventional double-tapping with a single finger.

Specific embodiments of the invention are set forth in dependent claims 2, 3, 5 and 6.

### Brief Description of the Drawings

The preferred embodiment of the present invention will now be described by way of example while referring to Figs. 1 through 6 in which:-

Fig. 1 is a diagram illustrating a touch input method according to one embodiment of the present invention.

Fig. 2 is a graph showing the touch input method according to the embodiment of the present invention.

Fig. 3 is a graph showing touch input by conventional double-tapping.

Fig. 4 is a flowchart for explaining a touch-panel driving method according to the embodiment of the present invention.

Fig. 5 is a diagram for explaining the structure of a touch-panel.

Fig. 6 is a diagram for explaining an input method for a touch-panel.

### Detailed Description

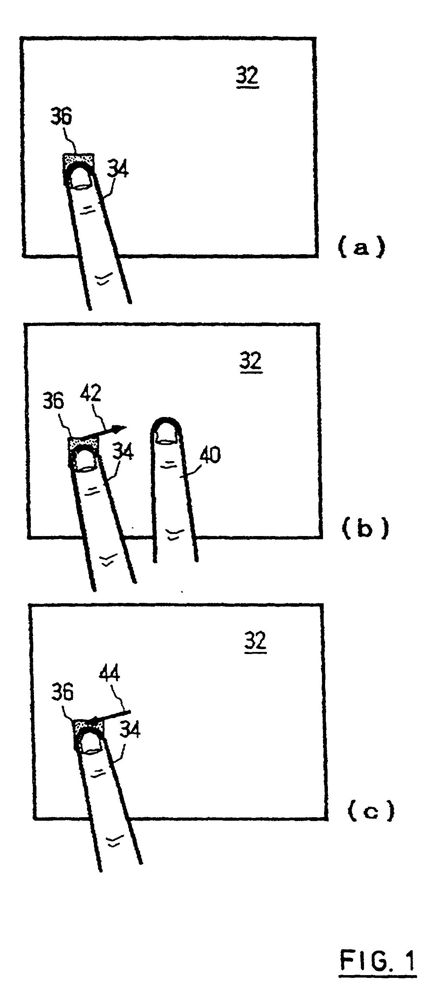

First, the processing for enabling a touch-panel to acknowledge double-tapping will be described while referring to Fig. 1. In Fig. 1(a), suppose that an icon 36 which is to be opened by double-tapping is present on a display screen to which a touch-panel 32 is attached. An index finger 34 of an operator is pressed down within the frame of the icon 36. The location of the icon 36 where the index finger 34 is placed is output by the touch-panel 32.

While the index finger 34 remains in contact with the icon 36 on the touch-panel 32, a different location on the touch panel 32 is tapped by a middle finger 40, for example (see Fig. 1(b). On a common sheet resistance touch-panel, when touch input has occurred at two places at a specific time, the middle position between the two positions is output as coordinate data. Therefore, so long as the touch-panel 32 is in contact with the middle finger 40 in Fig. 1(b), a position indicated by the distal end of an arrow 42, i.e., a position at the midpoint of a line that runs from the index finger 34 to the middle finger 40, is output by the touch-panel 32.

In Fig. 1(c) is shown the state wherein the tapping within a predetermined time by the middle finger 40 that is shown in Fig. 1(b) has been completed, and the index finger 34 continues to contact the icon 36 on the touch-panel 32. At this time, as is indicated by the distal end of an arrow, the location of the index finger 34 on the icon 36 is output, instead of the position at the midpoint of the line running between the index finger 34 and the middle finger 40.

The processing for acknowledging the double-tapping has been explained. Thereafter, the index finger 34 is released from the touch-panel 32 to begin a succeeding process.

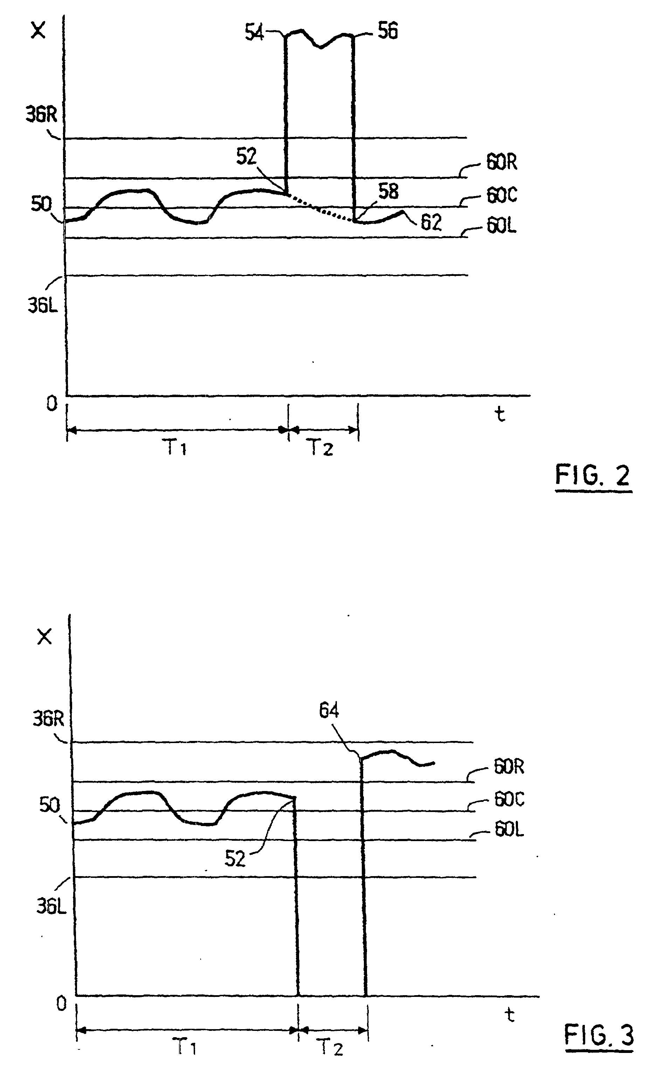

While in Fig. 1 is shown the positioning for the processing for acknowledging double-tapping, the embodiment of the present invention will be described in detail by also referring to Fig. 2, in which a time series is employed to describe the processing. In Fig. 2, the horizontal axis represents time and the vertical axis represents a positional change in the X direction output by the touch-panel 32. The positional change due to the movement of a finger while the touch-panel 32 is being pressed by the finger is represented by two dimensions in the X-Y direction. To make the description easy to understand, however, the positional change in the X direction will be specifically employed.

In Fig. 2, suppose that the time where the frame of the icon 36 begins to be pressed by the index finger 34 is a start position 50. The start position 50 is located between two frame edges 36R and 36L of the icon 36 in the X direction.

The output by the touch panel 32, which is produced as a result of the contact by the index finger 34, varies in consonance with the positional changes for the index finger 34 during time T1 within a predetermined period Twait (e.g., 0.5 second), which is determined in advance by a device driver of the touch-panel 32.

After T1, tapping by the middle finger 40 is performed during time T2 within a predetermined period Ttap (e.g., 0.2 second), which is determined by the device driver of the touch-panel 32. The output from the touch-panel 32 is changed to a position 54 that is the midpoint between the position 52 where the index finger 34 was located at time T1 and the position when tapping was begun by the middle finger 40.

At this time, if the value of the position 54 is a predetermined value or greater, which was determined by the device driver that serves as a touch-panel driver, the coordinate data for the position 52 is regarded as the first tapping position in double-tapping.

Then, when the time T2, wherein there is a slight positional change, has elapsed and the middle finger 40 is released from the touch-panel 32 at a position 56, tapping is completed and the output by the touch-panel 32 indicates a position 58 at which the touch-panel 32 is pressed by the index finger 34, as is indicated by the broken line, even during the tapping by the middle finger 40.

If a difference between the position 52 and the position 58 falls within a permissible range that is determined by the device driver for the touch-panel 32, the position 58 is regarded as the second tapping position, and the device driver notifies the system of the occurrence of the double-tapping at the icon 36. Line 60C represents the first tapping position 52, and permissible values 60R and 60L which are predetermined amounts are set as the upper and lower limits, with the tapping position 52 as the center.

Thereafter, the index finger 34 is released from the touch-panel 32 at an end position 62 and the output from the touch-panel 32 is 0. According to this embodiment, while the touch-panel located on a display is pressed at a desired position by the index finger, which is a first pressing means, a position that is different from the desired position is tapped by the middle finger, which is a second pressing means. Coordinate data that is different by a predetermined amount from the coordinate data for the desired position is output by the touch-panel. And coordinate data, which is output by the touch-panel and which is obtained before and after tapping is performed, is employed to determine whether or not to acknowledge that double tapping has been performed at the desired position.

As is described above, while the touch-panel located on a display is pressed at a desired position by the index finger, which is a first pressing means, a position that is different from the desired position is tapped by the middle finger, which is a second pressing means, so that the double-tapping on the touch-panel can be precisely acknowledged, even with a high resolution display.

As a comparison example, a conventional double-tapping method will now be explained while referring to Fig. 3, which shows the transient positional changes for a finger in the X direction. In conventional double-tapping, continuity in time for maintaining a position within a desired permissible range is cut off between the first tap and the second tap that is performed by a single finger. Thus, even when the positional locus up to the position 52, which is obtained by the first tap, is the same as is shown in Fig. 2, probably, the distance difference between the position 52 and the position 64, which is obtained by the second tap, will be great.

According to the method of the present invention for acknowledging double-tapping, since the touch-panel 32 can be continuously pressed by the index finger, the difference between the first and the second tapping positions, which is acquired within a brief time by the tapping with the middle finger, can fall within the permissible range.

It is easy to change the program of a device driver for a touch-panel. When the above described series of phenomena occurs, a properly programmed device driver notifies the OS of the occurrence of double-tapping.

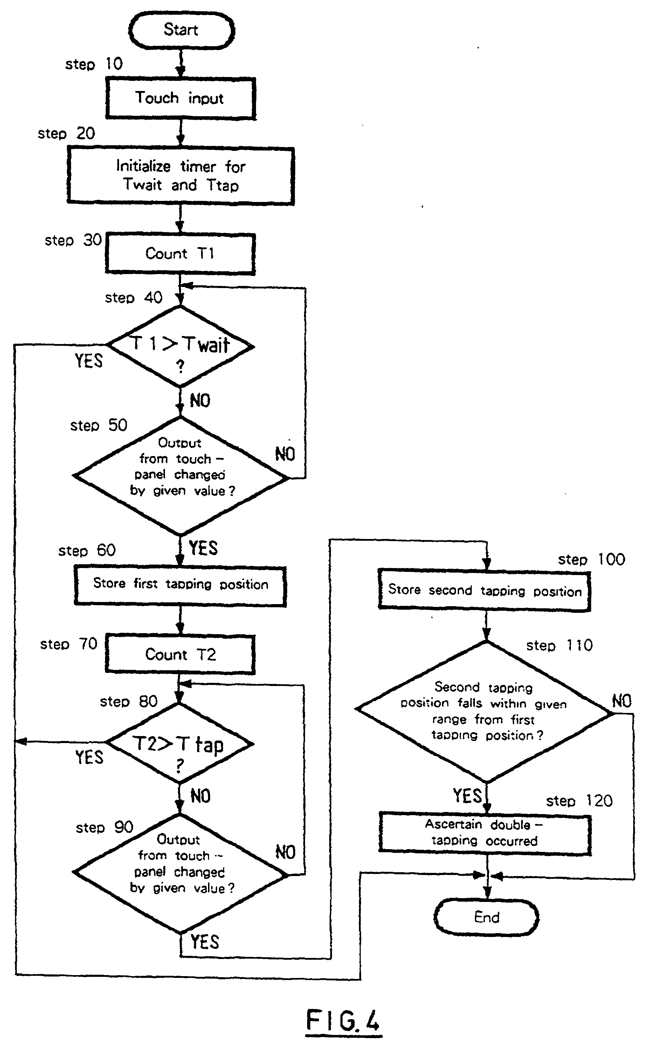

A driving method performed by the touch-panel driver (device driver) according to the embodiment of the present invention will now be described while referring to the flowchart in Fig. 4.

First, a check is performed to determine whether or not touch input has been made at the touch-panel 32 (step 10). If, at step 10, touch input is confirmed, a timer for predetermined times Twait and Ttap is initialized, which is used to determine whether or not the touch input is double-tapping (step 20).

At steps 30 and 40, while time T1 is being counted, time T1 is compared with Twait to determine whether or not the input (e.g., the pressing by using a finger) at step 10 has continued for a predetermined time. If T1 > Twait, the input is assumed not to be double-tapping and the processing is thereafter terminated. If Tl < Twait, it is assumed that the first depression has been performed, and a check is performed to determine whether the output from the touch-panel 32 during that period has been changed by a predetermined value or more (step 50). When the output from the touch-panel 32 has been changed by the predetermined value or more, it is assumed that the second depression has been performed.

When, at step 50, the output by the touch-panel 32 is changed by the predetermined value or more, the coordinate data, which represent the depression position based on the data that was output immediately before the output of the touch-panel 32 was changed, is stored as the first tapping position (step 60).

When, at step 50, the second depression is assumed, at steps 70 and 80 time T2 is compared with Ttap while time T2 is counted. If T2 > Ttap, it is assumed that double-tapping has not been performed, and the processing is thereafter terminated. If T2 < Ttap, the second depression is considered to have been completed and a check is then performed to determine whether the output from the touch-panel 32 has been changed by a predetermined value or more (step 90).

If, at step 90, the output from the touch-panel 32 has been changed by the predetermined value or more, coordinate data, which represent the depression position based on the data that was output immediately after the output from the touch-panel 32 was changed, is stored as the second tapping position (step 100).

Following this, a check is performed to determine whether or not the stored second tapping position falls within a predetermined range for the first tapping position (step 110). If the second tapping position is within the predetermined range, it is ascertained that double-tapping has occurred at the first tapping position (step 120). If the second tapping position falls outside the predetermined range, it is assumed that double-tapping has not occurred, and the processing is thereafter terminated.

The length of predetermined time periods Twait and Ttap may be properly determined in consonance with the speed at which operator's fingers are moved. Or, while taking the speed of movement into consideration, the time length may be arbitrarily changed within a predetermined range. Further, a predetermined range for a change in the output by a touch-panel may be properly altered in consonance with a display resolution, a resolution of the output of a touch-panel, and a display dimension.

In this manner, a special hardware device is not required and only a simple alteration of a device driver ensures an accurate double-tapping function. Further, according to the present invention, there is no need to rewrite the OS and application programs.

Besides the above embodiment, various other modifications are available for the present invention. Although a sheet resistance touch-panel is employed for this embodiment of the present invention, the present invention is not limited to this, and can be applied in the same manner for a so-called optical touch-panel.

In addition; although the index finger and the middle finger are employed as preferred touch input means for this embodiment, the index fingers of both hands may be employed. In this case, while the icon 36 is pressed by one of the index fingers, the other index finger may be used for tapping. Further, the touch input means is not limited to fingers, and a pen or another similar rod-shaped article can be used.

Although the positions 52 and 58 serve as double-tapping positions in this embodiment, a device driver can be differently programmed, and sampling can be performed for data for the position 52 obtained a predetermined time before, and data for the position 58 obtained a predetermined time after, so that these positions are regarded as positions for acknowledging double-tapping.

## Claims

1. A method of operating a touch-panel (32) comprising the steps of:-
detecting touch input coordinates over a time interval during which the panel is continuously touched in a touch input sequence;
comparing the coordinates during said interval to determine changes therein;
and, if said coordinates change from their initial values by more than a predetermined amount (42) and subsequently revert to values within said predetermined amount of their initial values, accepting the touch input sequence as a valid control input.

2. A method as claimed in claim 1 comprising the further steps of timing an initial period (T1) during which said coordinates maintain their initial values within said predetermined amount and, if said timed initial period exceeds a predetermined period (Twait), rejecting said touch input sequence as a valid control input.

3. A method as claimed in claim 1 or claim 2 comprising the further step of timing an intermediate period (T2) during which said coordinates differ by more than said predetermined amount from their initial values and, if said timed intermediate period exceeds a further predetermined period (Ttap), rejecting said input sequence as a valid control input.

4. A touch panel (32) having a driver circuit, the driver circuit including means for determining the coordinates of a touch input and which averages the coordinates of two concurrent touch inputs;
means for storing the coordinates of an initial touch input (36);
means for comparing determined coordinates with said stored initial coordinates during a touch input sequence over an interval of time and, if said coordinates differ by more than a predetermined amount (42) and subsequently revert to a difference of less than said predetermined amount, accepting the touch input sequence as a valid control input.

5. A touch panel as claimed in claim 4 further including timing means for timing an initial period (T1) during which said coordinates maintain their initial values within said predetermined amount, said comparing means rejecting said touch input sequence as a valid control input if said timed initial period exceeds a predetermined period (Twait).

6. A touch panel as claimed in claim 4 or claim 5 in which the timing means is arranged to time an intermediate period (T2) during which said coordinates differ by more than said predetermined amount from their initial values, said comparing means rejecting said touch input sequence as a valid control input if said timed intermediate period exceeds a further predetermined period (Ttap).

## Patentansprüche

1. Verfahren zum Betrieb eines Berührbedienfeldes (32), das folgende Schritte umfasst:
Detektieren von Berühreingabekoordinaten über eine Zeitspanne hinweg, während der das Bedienfeld kontinuierlich in einer Berühreingabesequenz berührt wird;
Vergleichen der Koordinaten während der Zeitspanne, um Änderungen darin zu bestimmen;
und Akzeptieren der Berühreingabesequenz als gültige Steuereingabe, wenn die Koordinaten von ihren Anfangswerten um mehr als ein vorgegebenes Maß (42) abweichen und anschließend zu Werten innerhalb des vorgegebenen Maßes ihrer anfänglichen Werte zurückkehren.

2. Verfahren nach Anspruch 1, das die weiteren Schritte der Zeitmessung einer Anfangsperiode (T1), während der die Koordinaten ihre Anfangswerte innerhalb des vorgegebenen Maßes halten, und, wenn die gemessene Anfangsperiode eine vorgegebene Periode (Twait) übersteigt, eines Zurückweisens der Berühreingabesequenz als gültige Steuereingabe umfasst.

3. Verfahren nach Anspruch 1 oder Anspruch 2, das den weiteren Schritt der Zeitmessung einer Zwischenperiode (T2), während der die Koordinaten um mehr als das vorgegebene Maß von ihren Anfangswerten abweichen, und, wenn die gemessene Zwischenperiode eine vorgegebene Periode (Ttap) übersteigt, eines Zurückweisens der Eingabesequenz als gültige Steuereingabe umfasst.

4. Berührbedienfeld (32) mit einem Treiberschaltkreis, wobei der Treiberschaltkreis Mittel zum Bestimmen der Koordinaten einer Berühreingabe beinhaltet und die Koordinaten zweier gleichzeitiger Berühreingaben mittelt;
Mitteln zum Speichern der Koordinaten einer anfänglichen Berühreingabe (36) ;
Mitteln zum Vergleichen erfasster Koordinaten mit den gespeicherten Anfangskoordinaten während einer Berühreingabesequenz über eine Zeitspanne hinweg und Akzeptieren der Berühreingabesequenz als gültige Steuereingabe, wenn die Koordinaten um mehr als ein vorgegebenes Maß (42) abweichen und anschließend zu einer Differenz von weniger als dem vorgegebenen Maß zurückkehren.

5. Berührbedienfeld nach Anspruch 4, das des Weiteren Zeitmessmittel zur Zeitmessung einer Anfangsperiode (T1) beinhaltet, während der die Koordinaten ihre Anfangswerte innerhalb des vorgegebenen Maßes halten, wobei die Vergleichsmittel die Berühreingabesequenz als gültige Steuereingabe zurückweisen, wenn die gemessene anfängliche Periode eine vorgegebene Periode (Twait) übersteigt.

6. Berührbedienfeld nach Anspruch 4 oder Anspruch 5, bei dem die Zeitmessmittel dazu angeordnet sind, eine Zwischenperiode (T2) zu messen, während der die Koordinaten um mehr als das vorgegebene Maß von ihren Anfangswerten abweichen, wobei die Vergleichsmittel die Berühreingabesequenz als gültige Steuereingabe zurückweisen, wenn die gemessene Zwischenperiode eine weitere vorgegebene Periode (Ttap) übersteigt.

## Revendications

1. Un procédé de fonctionnement d'un panneau tactile (32), comprenant les étapes consistant à :
détecter des coordonnées d'entrée tactile sur la durée d'un intervalle de temps pendant lequel le panneau est soumis de façon continue à un toucher, en une séquence d'entrée tactile ;
comparer les coordonnées durant ledit intervalle, afin de déterminer les changements s'y étant produits ;
et, s'il y a changement desdites coordonnées par rapport à leurs valeurs initiales, ceci d'une valeur supérieure à une quantité (42) prédéterminée, puis retour à des valeurs situées dans la plage de ladite quantité prédéterminée par rapport à leurs valeurs initiales, acceptation de la séquence d'entrée tactile comme entrée de commande valide.

2. Un procédé selon la revendication 1, comprenant les étapes supplémentaires consistant à mesurer la durée d'une période initiale (T1) durant laquelle lesdites coordonnées conservent leurs valeurs initiales dans dans la plage de ladite quantité prédéterminée et, si ladite période initiale mesurée dépasse une durée de période prédéterminée (Twait), rejeter ladite séquence d'entrée tactile en tant qu'entrée de commande valide.

3. Un procédé selon la revendication 1 ou la revendication 2, comprenant l'étape supplémentaire de mesure de la durée d'une période intermédiaire (T2) durant laquelle lesdites coordonnées diffèrent, de plus que de ladite quantité prédéterminée, par rapport à leurs valeurs initiales et, si la durée de ladite période intermédiaire est supérieure à une autre période prédéterminée (Ttap), rejeter ladite séquence d'entrée en tant qu'entrée de commande valide.

4. Un panneau tactile (32) comportant un circuit pilote, le circuit pilote comprenant des moyens pour déterminer les coordonnées d'une entrée tactile et formant la moyenne des coordonnées de deux entrées tactiles simultanées ;
des moyens pour stocker les coordonnées d'une entrée tactile initiale (36) ;
des moyens pour comparer des coordonnées déterminées auxdites coordonnées initiales stockées durant une séquence d'entrée tactile, sur la durée d'un intervalle de temps et, si lesdites coordonnées sont différentes de plus de la valeur d'une quantité prédéterminée (42) et subséquemment reviennent à une valeur donnant une différence inférieure à la plage de ladite quantité prédéterminée, accepter la séquence d'entrée tactile en
tant qu'entrée de commande valide.

5. Un panneau tactile selon la revendication 4, comprenant en outre des moyens de mesure de la durée pour mesurer une période initiale (T1) durant laquelle lesdites coordonnées conservent leurs valeurs initiales dans ladite quantité prédéterminée, lesdits moyens de comparaison rejetant ladite séquence d'entrée tactile en tant qu'entrée de commande valide si la durée mesurée de ladite période initiale dépasse une période prédéterminée (Twait).

6. Un panneau tactile selon la revendication 4 ou la revendication 2, dans lequel les moyens de mesure de la durée sont agencés pour mesurer la durée d'une période intermédiaire (T2), durant laquelle lesdites coordonnées diffèrent de plus de ladite quantité prédéterminée par rapport à leurs valeurs initiales, lesdits moyens de comparaison rejetant ladite séquence d'entrée tactile en tant qu'entrée de commande valide si ladite période intermédiaire mesurée dépasse une autre période prédéterminée (Ttap).
